# EUROPÄISCHE PATENTSCHRIFT

(11) **EP 1 848 876 B1**
(45) Veröffentlichungstag und Bekanntmachung des Hinweises auf die Patenterteilung: **17.08.2011**
(21) Anmeldenummer: 06708140.6
(22) Anmeldetag: 09.02.2006
(51) Int. Cl.: F01D 5/14

(54) **VERFAHREN ZUR ERHÖHUNG DER ERMÜDUNGSLEBENSDAUER EINES SCHAUFELFUßES EINER TURBOMASCHINENSCHAUFEL**
METHOD FOR PROLONGING THE FATIGUE LIFE OF A BLADE FOOTING OF A TUROBMACHINE BLADE
PROCEDE POUR AUGMENTER LA DUREE DE VIE EN FATIGUE DE L'EMPLANTURE D'UNE AUBE DE TURBOMACHINE

(30) Priorität: 15.02.2005 CH 2592005
(43) Veröffentlichungstag der Anmeldung: 31.10.2007
(73) Patentinhaber: Alstom Technology Ltd, 5400 Baden (CH)
(72) Erfinder: MEHLER, Alexander, 8280 Kreuzlingen (CH); CHEN, Jian, CH-5200 Brugg (CH)
(86) Internationale Anmeldenummer: PCT/EP2006/050796
(87) Internationale Veröffentlichungsnummer: WO 2006/087292

(56) Entgegenhaltungen:
- DE-A1- 4 309 176
- DE-A1- 19 516 834
- GB-A- 2 406 532
- SU-A1- 1 754 422
- US-A1- 2004 064 945
- PATENT ABSTRACTS OF JAPAN Bd. 007, Nr. 009 (M-185), 14. Januar 1983 (1983-01-14) -& JP 57 168006 A (MITSUBISHI JUKOGYO KK), 16. Oktober 1982 (1982-10-16)

## Beschreibung

### Technisches Gebiet

Die Erfindung betrifft ein Verfahren zur Erhöhung der Ermüdungslebensdauer eines Schaufelfußes einer Turbomaschinenschaufel.

### Stand der Technik

Die Schaufelfüße von Turbomaschinenschaufeln sind im Betrieb der Turbomaschine hohen mechanischen Belastungen ausgesetzt. Dies trifft im Besonderen auf die Schaufelfüße von Rotorschaufeln zu, über die die im Betrieb auf die jeweilige Schaufel einwirkenden, strömungsinduzierten Kräfte sowie die auf die jeweilige Schaufel einwirkenden Zentrifugalkräfte in die angrenzenden Wellenbauteile abgeleitet werden. Neben mechanischen Belastungen treten vor allem bei Turbinenschaufeln zusätzlich hohe thermische Belastungen auf.

Aus dem Stand der Technik bekannte und weithin verbreitete Schaufelfußbauformen sind die Hammerfuß-Bauform sowie die Tannenbaum-Bauform. In dem zumeist dreiecksförmig ausgebildeten Schaufelfuß sind an den beiden freien Dreiecksseiten jeweils wenigstens eine Nut zur hintergreifenden Fixierung in einem angrenzenden Bauteil angeordnet. Das in der Zusammenbauanordnung der Turbomaschine an den Schaufelfuß angrenzende Bauteil weist zur formschlüssigen Aufnahme des Schaufelfußes eine der Kontur des Schaufelfußes entsprechende Aussparung auf. In der Aussparung des Bauteils sind Stege oder Aufdickungen angeordnet, die in der Zusammenbauanordnung in die Nuten des Schaufelfußes eingreifen. Der Schaufelfuß der Schaufel läßt sich somit formschlüssig in die Aussparung des Bauteils einfügen und wird durch die in die Nuten hintergreifenden Stege bzw. Aufdickungen in dem Bauteil fixiert.

Die im Betrieb der Turbomaschine auf die Schaufel einwirkenden Kräfte werden somit zu einem bedeutenden Teil über den in den Paarungen Nut/Steg bzw. Verdickung auftretenden Flächenschluss in das jeweils angrenzende Bauteil übertragen. Jedoch führen die in dem Schaufelfuß angeordneten Nuten aufgrund von Kerbwirkung gleichzeitig zu einer lokalen Schwächung des Schaufelfußes. Ermüdungserscheinungen der Schaufelfüße treten daher oftmals zuerst im Bereich der Nuten auf. Hier kommt es zu Rissbildungen. Die betreffende Schaufel muss dann überholt oder ausgetauscht werden. Die Lebensdauer der Schaufel ist somit häufig durch die maximale Dauerbelastbarkeit des Schaufelfußes im Bereich der Nuten begrenzt.

Es wurde zwar versucht, die Dauerbelastbarkeit der Schaufetfüße durch bekannte Oberflächenbehandlungen, wie beispielsweise Sand- oder Kugelstrahlen oder ein Beschichten der Oberflächen, zu verbessern. Durch diese Oberflächenbehandlungen lassen sich die Oberflächen zwar härten, so dass diese mit höheren Flächenbelastungen, insbesondere auch mit kurzzeitig höheren lokalen Belastungen, belastbar sind. Die durch niederfrequente Wechsel- bzw. Schwingbelastungen hervorgerufenen Ermüdungserscheinungen, die eine wesentliche Ursache für die Ausbildung von Ermüdungs-Rissbildungen darstellen, lassen sich hierdurch aber nicht verbessern.

Aus der DE 43 09 176 A 1 ist ein Verfahren zu entnehmen, mit dem die Materialbereiche der Befestigungsnuten an Turbinenschaufelfüssen einem mehrfach lokalen Druckspannungseintrag unterliegen, um in diesen Bereichen eine erhöhte Schädigungsresistenz gegen Schwingungsrisskorrosion zu erhalten. Hierzu wird der Nutboden der Befestigungsnuten mehrfach mit einem balligen Werkzeug druckbeaufschlagt kontaktiert, wodurch innerhalb des Nutbodens im Wege elastischer und plastischer Verformungen Druckeigenspannungen induziert werden. Das ballige Werkzeug ist vorzugsweise als Rolle ausgebildet und wird längs der Befestigungsnuten eingesetzt und längs dieser abgerollt.

Eine vergleichbare Verfahrensweise ist aus der JP 57168006 A zu entnehmen. Auch in diesem Fall wird die Korrosionsbeständigkeit von Turbinenschaufeln insbesondere in den Bereichen der Befestigungsnuten durch lokalen Druckeintrag erhöht, um so lokale, in den Befestigungsnuten verbleibende Druckeigenspannungen zu generieren.

### Darstellung der Erfindung

Der Erfindung liegt somit die Aufgabe zugrunde, ein Verfahren der eingangs genannten Art anzugeben mit dem es möglich sein soll die Ermüdungslebensdauer eines Schaufelfusses einer Turbomaschinenschaufel zu erhöhen mit einem gegenüber dem Stand der Technik reduzierten Verfahrensaufwand.

Diese Aufgabe wird erfndungsgemäß durch das Verfahren gemäss Anspruch 1 Weitere vorteilhafte Ausgestaltungen der Erfindung finden sich in den Unteransprüchen.

Zur hintergreifenden Fixierung in einem Wellenbauteil oder einem Gehäusebauteil einer Turbomaschine sind die von der Erfindung betrachteten, beispielsweise als Hammerfuß ausgebildeten Schaufelfüße jeweils, wie aus dem Stand der Technik bekannt, mit einer Nut ausgestattet. Das Verfahren umfasst, gleichfalls zum Stand der Technik, dem Kerbgrund der Nut in zumindest einem Abschnitt der Nut ein mechanisches Spannungsfeld aufzuprägen, wobei das aufgeprägte mechanische Spannungsfeld eine plastische Verformung des Kerbgrunds bewirkt. Mit Kerbgrund ist die an die Oberfläche der Nut angrenzende Materialschicht des Schaufelfußes bezeichnet. Das in dem Kerbgrund der Nut aufgeprägte mechanische Spannungsfeld wird anschließend in Nutlängsrichtung der Nut fortbewegt, wodurch in jedem überstrichenen Abschnitt der Nut eine plastische Verformung des Kerbgrunds bewirkt wird. Das aufgeprägte mechanische Spannungsfeld wird anschließend wieder entfernt, wobei innerhalb der Bereiche der Nut, in denen das mechanische Spannungsfeld aufgeprägt war, in dem Kerbgrund der Nut Druckeigenspannungen verbleiben.

Zweckmäßig wird das aufgeprägte mechanische Spannungsfeld längs der gesamten Länge der Nut fortbewegt, so dass nach dem Entfernen des aufgeprägten mechanischen Spannungsfelds über die gesamte Länge der Nut Druckeigenspannungen im Kerbgrund verbleiben.

Mittels dem Verfahren wird dem Kerbgrund der Nut ein verbleibendes Druckeigenspannungsfeld induziert. Im Betrieb der Schaufel wird dieses verbleibende Druckeigenspannungsfeld von den betriebsinduzierten Spannungen überlagert, die sich durch die auf die Schaufel einwirkenden Kräfte ergeben. Die im Betrieb auf den Kerbgrund wirkenden Zugbelastungen werden durch das verbleibende Druckeigenspannungsfeld zumindest teilweise oder auch vollständig kompensiert, so dass sich eine erheblich geringere Zugmittelspannung im Kerbgrund einstellt. Im Betrieb auf den Kerbgrund einwirkende Druckbelastungen addieren sich zwar zu den Druckeigenspannungen des Druckeigenspannungsfelds. Es zeigte sich jedoch, dass Druckbelastungen einen nur geringen Einfluss auf Ermüdungserscheinungen des Materials des Schaufelfußes haben. Insgesamt führt dies somit bei gleicher Belastungssituation zu einer geringeren Ermüdung des Schaufelfußes infolge von Wechselbelastungen des Nutmaterials. Die Turbomaschinenschaufel kann somit über eine längere Betriebsdauer eingesetzt werden. Dies führt zu geringeren Wartungskosten sowie zu erhöhten Standzeiten der Turbomaschine.

Lösungsgemäß wird das Einpressprofil trapezförmig mit einer breiten Trapezbasisseite, einer schmalen Trapezbasisseite sowie zwei Trapezschenkeln ausgebildet. Das Trapez ist so aufgespannt, dass in einer Einpressanordnung die schmale Trapezbasisseite am weitesten in die Nut eindringt, den Kerbgrund der Nut jedoch nicht berührt. Die breite Trapezseite hingegen ist so breit ausgeführt, dass die Trapezschenkel, die als Verbindungsflächen zwischen der breiten und der schmalen Trapezbasisseite ausgebildet sein, an den Nutschultern der Nut zum Aufliegen kommen. Bei einem Einpressen des Einpressprofils in die Nut wird die Einpresskraft über die Nutschultern eingeleitet und die Nut hierdurch aufgespreizt. Nach dem Beenden des Einpressvorgangs kommt es aufgrund der elastischen Kräfte des Werkstoffs des Schaufelfußes zu einer weitgehenden oder vollständigen Rückgängigmachung der Verformung. Im Kerbgrund verbleibt jedoch ein Druckeigenspannungsfeld.

Idealerweise wird das Druckeigenspannungsfeld so gewählt, dass die Lastzyklen im Betrieb symmetrisch auftreten. Hierdurch wird letztlich die nutzbare Lastspielzahl deutlich erhöht. Gleichzeitig wird zusätzlich als Nebeneffekt aber auch die Wechselfestigkeit erhöht.

Durch das Einpressen des Einpresswerkzeugs in die Nut wird in dem Kerbgrund ein Spannungsfeld aufgebaut, das nach Entfernen der Einpresskraft zu einem in dem Kerbgrund verbleibenden Druckeigenspannungsfeld führt. Durch Verwendung des Einpresswerkzeugs und ein Einpressen des Einpresswerkzeugs mit einer definierten Einpresskraft kann so in reproduzierbarer Weise über die gesamte Nut ein definiertes und gleichbleibendes Druckeigenspannungsfeld erzeugt werden.

In einer zweckmäßigen Ausgestaltung der Erfindung wird das in dem Kerbgrund der Nut aufgeprägte mechanische Spannungsfeld durch ein Rollen oder Walzen des Einpresswerkzeugs längs der Nut fortbewegt. Vorzugsweise wird der Schaufelfuß synchron zum Abrollvorgang des Einpresswerkzeugs und hierauf abgestimmt translatorisch verschoben.

Beispielsweise kann das Einpresswerkzeug als Einpressrad ausgeführt sein. Mittels dem als Einpressrad ausgeführten Einpresswerkzeug kann in einfacher Weise eine definierte Einpresskraft erzeugt und längs der gesamten Nut fortbewegt werden.

Zweckmäßig wird die definierte Einpresskraft in Abhängigkeit der maximalen, im Betrieb der Schaufel auftretenden Wechsel- bzw. Schwingbeanspruchung des Schaufelfußes, des Materials des Schaufelfußes sowie der Kontur des Einpresswerkzeugs ermittelt.

So hat sich beispielsweise herausgestellt, dass es bei einem aus einer Nickel-Basis-Legierung hergestellten Schaufelfuß zweckmäßig ist, den Kerbgrund der Nut durch das aufgeprägte Spannungsfeld in einem Bereich zwischen 5% und 12% plastischer Dehnung zu verformen. Durch eine plastische Dehnung des Materials des Kerbgrunds innerhalb dieses bevorzugten Bereichs bildet sich nach Beenden des Einpressvorgangs ein hinreichend hohes Druckeigenspannungsfeld aus, um im Betrieb der Schaufel auftretende Zugspannungen hinreichend zu kompensieren. Andererseits wird eine Überdehnung des Materials des Kerbgrunds als Folge des Einpressvorgangs vermieden.

Bei einem aus einer Titan-Legierung hergestellten Schaufelfuß ist es zweckmäßig, den Kerbgrund der Nut durch das aufgeprägte Spannungsfeld in einem Bereich zwischen 4% und 8% plastischer Dehnung zu verformen. Durch eine plastische Dehnung des Materials des Kerbgrunds innerhalb dieses bevorzugten Bereichs bildet sich nach Beenden des Einpressvorgangs ein hinreichend hohes Druckeigenspannungsfeld aus, um im Betrieb der Schaufel auftretende Zugspannungen hinreichend zu kompensieren. Andererseits wird eine Überdehnung des Materials im Kerbgrund als Folge des Einpressvorgangs vermieden.

Das erfindungsgemäße Verfahren kommt vorzugsweise bei der Herstellung von Schaufeln für Turbomaschinen oder Turbogruppen, wie beispielsweise Gas- oder Dampfturbinen, oder auch der Herstellung von Schaufeln zu anderen Einsatzzwecken zum Einsatz. Hierdurch läßt sich sowohl die Gesamtlebensdauer der herzustellenden Schaufel als auch die Betriebszeit bis zu einer Inspektions-Überholung der Schaufel erhöhen.

Vorteilhaft kann das erfindungsgemäße Verfahren aber auch auf eine bereits im Betrieb eingesetzte, zu überholende Schaufel angewendet werden. Hierdurch läßt sich oftmals sowohl die Restlebensdauer der zu überholenden Schaufel als auch die Zeitdauer bis zur nächsten Inspektions-Überholung der Schaufel erhöhen. Es hat sich hierbei als sehr zweckmäßig erwiesen, dass durch das erfindungsgemäße Verfahren zur Erhöhung der Wechselfestigkeit einer Schaufel nur kleinste GeometrieÄnderungen des Schaufelfußes hervorgerufen werden. Nacharbeiten an der zu überholenden Schaufel nach Durchführen des erfindungsgemäßen Verfahrens sind somit nicht erforderlich.

In einem weiteren Aspekt wird eine Turbomaschinenschaufel mit einem Schaufelfuß mit erhöhter Wechselfestigkeit zur Verfügung gestellt. Der Schaufelfuß umfasst wenigstens eine in dem Schaufelfuß angeordnete Nut zur hintergreifenden Fixierung in einem Wellenbauteil oder einem Gehäusebauteil einer Turbomaschine. Zur Erhöhung der Wechselfestigkeit des Schaufelfußes ist der Schaufelfuß gemäß dem vorstehend beschriebenen erfindungsgemäßen Verfahren bearbeitet.

Die Vorteile der erfindungsgemäßen Turbomaschinenschaufel gegenüber den aus dem Stand der Technik bekannten Turbomaschinenschaufeln entsprechen den oben mit Bezug auf das erfindungsgemäß ausgeführte Verfahren getroffenen Ausführungen.

Zweckmäßig ist die Turbomaschinenschaufel als Rotorschaufel einer Turbomaschine, vorzugsweise als Verdichterrotorschaufel einer Turbomaschine ausgebildet. Auf Rotorschaufeln wirken während des Betriebs der Turbomaschine üblicherweise hohe Zentrifugalkräfte. Neben hochfrequenten Schwingungen wirken beispielsweise durch das Anfahren und das Herunterfahren der Turbomaschine sowie durch Lastwechsel der Turbomaschine zusätzlich hohe niederfrequente Wechselbeanspruchungen auf die Schaufelfüße der Rotorschaufeln. Insofern führt die Anwendung des erfindungsgemäßen Verfahrens insbesondere bei Rotorschaufeln zu einer erheblichen Verminderung der effektiven Spannungsbelastung des Schaufelfußes und somit zu einer Verlängerung der Lebensdauer der Schaufeln.

Der Schaufelfuß der Turbomaschinenschaufel ist zweckmäßig aus einer Nickel-Basis-Legierung oder einer Titan-Legierung hergestellt.

Die in dem Schaufelfuß angeordnete Nut ist vorzugsweise mit einer halbkreisförmigen oder näherungsweise halbkreisförmigen Kontur ausgeführt. Durch einen halbkreisförmigen oder näherungsweise halbkreisförmigen Konturverlauf der Nut ist eine Flächenbelastung des Kerbgrunds mit einem weitgehend stetigen Verlauf ohne sprunghafte Veränderung der Flächenbelastung gewährleistet. Dementsprechend ist auch der Spannungsverlauf im Kerbgrund stetig und ohne sprunghafte Veränderung.

### Kurze Beschreibung der Zeichnungen

Die Erfindung wird nachfolgend anhand zweier in den Figuren illustrierten Ausführungsbeispiele näher erläutert. Es zeigen:
- Figur 1: eine Turbomaschinenschaufel mit Schaufelfuß sowie ein Ein- presswerkzeug zur Durchführung des erfindungsgemäßen Ver- fahrens zur Erhöhung der Wechselfestigkeit des Schaufelfußes;
- Figur 2: den Bewegungsablauf des in Figur 1 dargestellten Einpress- werkzeuges bzw. der Schaufelfüße bei der Durchführung des er- findungsgemäßen Verfahrens und
- Figur 3: in einem Spannungs-Dehnungs-Diagramm das mittels dem Ein- presswerkzeug aus Figur 1 erzielte Druckeigenspannungsfeld.

In den Figuren sind nur die für das Verständnis der Erfindung wesentlichen Elemente und Bauteile dargestellt.

Das dargestellte Ausführungsbeispiel ist rein instruktiv zu verstehen und soll einem besseren Verständnis, aber nicht einer Einschränkung des Erfindungsgegenstandes dienen.

### Wege zur Ausführung der Erfindung

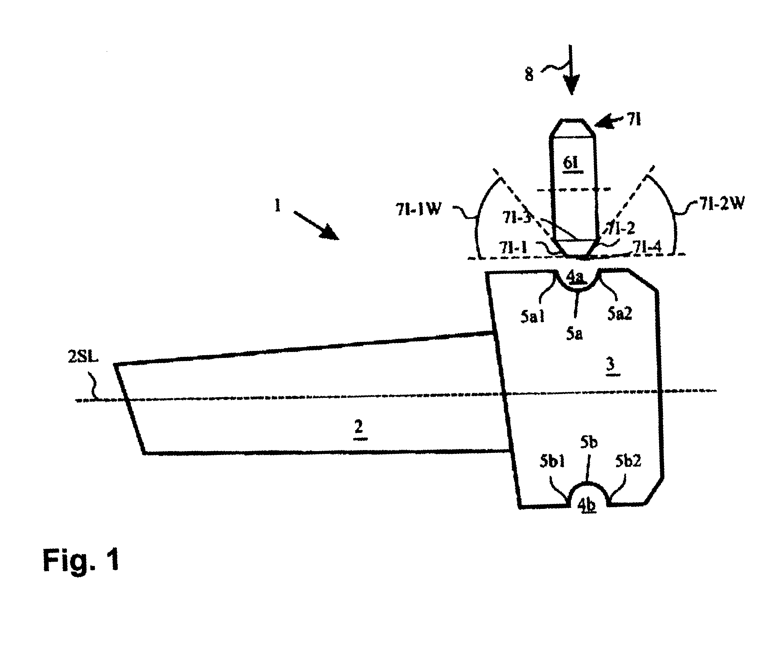

In der Figur 1 ist eine Verdichterrotorschaufel 1 einer Gasturbine schematisch dargestellt. Die Schaufel 1 umfasst jeweils ein Schaufelblatt 2 sowie einen sich in Schaufelblattlängsrichtung fußseitig an das Schaufelblatt 2 anschließenden Schaufelfuß 3. Der Schaufelfuß 3 dient dazu, die betreffende Rotorschaufel 1 in einem Wellenbauteil der Gasturbine zu verankern. Hierfür weist der in Figur 1 dargestellte, hier im Wesentlichen quaderförmig ausgeführte Schaufelfuß 3 an seinen Breitseiten Nuten 4a, 4b auf. Die jeweils halbkreisförmig ausgebildeten Nuten 4a, 4b verlaufen senkrecht oder im Wesentlichen senkrecht zur Schaufelblattlängsrichtung 2SL in Breitenrichtung des jeweiligen Schaufelfußes 3. Zur Fixierung der Schaufeln 1 weisen die Wellenbauteile dem Konturverlauf der Schaufelfüße entsprechende Aussparungen auf. In den Aussparungen der Wellenbauteile sind ferner Fixierstege angeordnet, die in die Nuten 4a, 4b der Schaufelfüße 3 eingreifen und die Schaufelfüße 3 so jeweils mittels hintergreifendem Formschluss in Schaufellängsrichtung 2SL fixieren. Somit lassen sich insbesondere die im Betrieb der Schaufeln durch die Rotation des Rotors auf die jeweilige Schaufel einwirkenden Zentrifugalkräfte in günstiger Weise von der Schaufel in das betreffende Wellenbauteil einleiten. Durch die halbkreisförmige Kontur der Nuten 4a und 4b sowie der in die Nuten eingreifenden Fixierstege ergibt sich ein stetiger Spannungsverlauf über der Nutkontur ohne sprunghafte Veränderungen des Spannungsverlaufs.

Zur Montage werden die Schaufeln 1 üblicherweise seitlich in die Aussparungen der Wellenbauteile eingeschoben.

Um eine höhere Flächenpressung des Materials insbesondere des Schaufelfußes aber auch des Wellenbauteils im Bereich der Nuten zu ermöglichen, sind die Schaufelfüße herkömmlich häufig sand- oder kugelgestrahlt und/oder beschichtet und/oder diffusionsgehärtet. Eine solche Behandlung führt zu einer höheren Oberflächenhärte, so dass die Oberfläche mit einer höheren statischen Belastung beaufschlagt werden kann.

Neben statischen Belastungen treten im Betrieb der Schaufeln aber zusätzlich auch Wechsel- bzw. Schwingbelastungen auf. So werden beispielsweise durch das Anfahren und Herunterfahren der Turbomaschine niederfrequente Wechselbelastungen erzeugt. Hinzu kommen hochfrequente Wechselbeanspruchungen der Schaufeln. Neben einer maximal zulässigen statischen Belastungsgrenze wird die Lebensdauer der Schaufeln häufig durch die maximal zulässige Anzahl von Wechselschwingspielen, die sogenannte Wechsetfestigkeit, begrenzt. Diese Wechselfestigkeit wird durch hohe thermische oder zusätzliche statische Belastungen des Schaufelfußes weiter vermindert. Ferner führen die der Befestigung und Fixierung dienenden Nuten jeweils zu einer Kerbwirkung in dem Schaufelfuß, die zu einer Schwächung des Schaufelfußes im Bereich der Nuten insbesondere im Hinblick auf die Wechselfestigkeit führen. Daher ist die Lebensdauer der Schaufeln heutzutage oftmals durch die maximal zulässige Wechselfestigkeit des Schaufelfußes begrenzt. Bei Erreichen der maximal zulässigen Wechselschwingzahl muss die Schaufel erneuert oder zumindest überholt werden. Im Betrieb der Schaufeln treten durch die Überlagerungen von statischen und wechselnden bzw. schwingenden sowie von thermischen Belastungen aber häufig auch Gesamtbelastungen auf, die die maximal zulässige Materialbelastung überschreiten. Hierdurch wie auch bei Überschreiten der maximal zulässigen Schwingzahl kann es insbesondere zu Rissbildungen vor allem im Schaufelfuß kommen, wodurch ein Austauschen der betroffenen Schaufel erforderlich wird.

Hier will die Erfindung Abhilfe schaffen. Mittels der Erfindung lassen sich die im Betrieb effektiv auf einen Schaufelfuß einwirkenden mittleren Zugspannungen vermindern, wodurch die Ermüdungslebensdauer des Schaufelfußes erhöht wird.

Bei dem in Figur 1 dargestellten, als Hammerfuß ausgebildeten Schaufelfuß wird dies dadurch erreicht, dass den Kerbgründen 5a und 5b der Nuten 4a und 4b des in Figur 1 dargestellten Schaufelfuße 3 jeweils in einem Bearbeitungsschritt wenigstens innerhalb eines Abschnitts der betreffenden Nut 4a bzw. 4b ein mechanisches Spannungsfeld aufgeprägt wird, wobei das aufgeprägte mechanische Spannungsfeld eine plastische Verformung der Kerbgründe 5a, 5b der Nuten 4a und 4b in dem beaufschlagten Abschnitt bewirkt. Das aufgeprägte mechanische Spannungsfeld wird anschließend in Nutlängsrichtung der jeweiligen Nut 4a und 4b fortbewegt. Ist die Nut 4a bzw. 4b über ihre gesamte Länge in dieser Weise bearbeitet, so wird das aufgeprägte mechanische Spannungsfeld wieder entfernt, wobei jedoch im Kerbgrund 5a bzw. 5b der Nut 4a bzw. 4b Druckeigenspannungen verbleiben.

In Figur 1 ist neben der Schaufel 1 ein Einpresswerkzeug dargestellt, das sich zur Durchführung des erfindungsgemäßen Verfahrens eignet.

Das Einpresswerkzeug ist hier als Einpressrad 61 ausgeführt, das zur Erzeugung des mechanischen Spannungsfeldes umfangsseitig in die jeweilige Nut 4a und 4b des betreffenden Schaufelfußes 2 eingepresst wird.

Das Einpressprofil 71 des in Figur 1 dargestellten Einpressrades 61 ist trapezförmig ausgebildet und umfasst eine breite Trapezbasisseite71-3, eine schmale Trapezbasisseite 71-4 sowie zwei Trapezschenkel 7I-1 und 7I-2. Die freien Winkel 7I-1W und 7I-2W zwischen den Trapezschenkeln 7I-1 und 7i-2 und der schmalen Trapezbasisseite 71-4 beträgt vorzugsweise etwa 60° bis 80°. Beim Einpressen des Einpressrades 6I in die zu bearbeitende Nut kommen die Trapezschenkel 7I-1 und 7I-2 an den Nutschultern 5a1 und 5a2 bzw. 5b1 und 5b2 der Nuten 4a bzw. 4b zum Anliegen kommen. Wird nun zum Aufprägen des mechanischen Spannungsfeldes das Einpressrad 61 gemäß der in Figur 1 dargestellten Pfeilrichtung 8 mit einer definierten Einpresskraft in die Nut 4a eingepresst, so kommen die Trapezschenkel 7I-1 und 7I-2 an den Nutschultern 5a1 und 5a2 der Nut 4a zum Anliegen und leiten hierüber die Einpresskraft in den Kerbgrund 5a der Nut ein. Hierdurch wird die Nut 4a aufgespreizt verbunden mit einer plastischen Verformung des Kerbgrunds 5a. Nach Entfernen des Einpressrads 6I verbleibt im wieder entlasteten Zustand im Kerbgrund 5a ein Druckeigenspannungsfeld. Diese Ausführungen gelten gleichermaßen auch für die weitere in Figur 1 dargestellte Nut 4b.

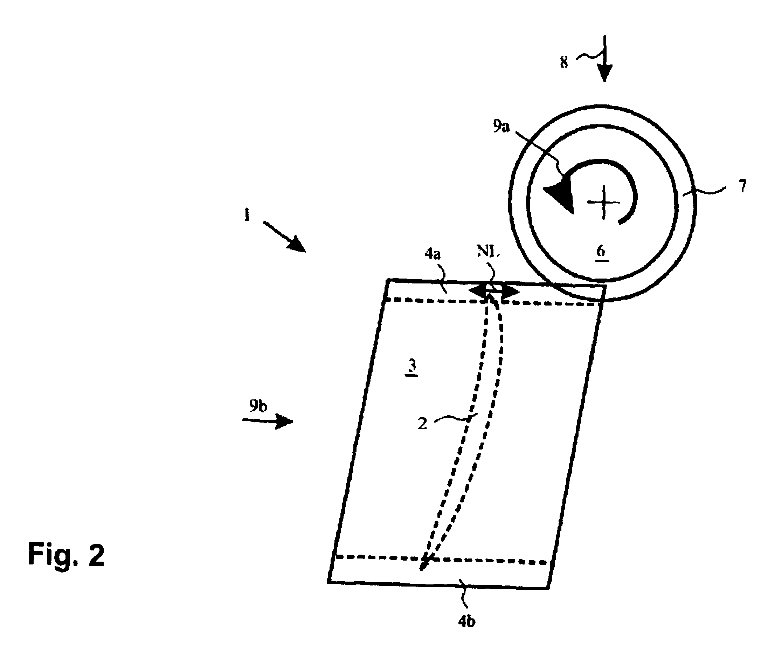

Um die mechanischen Spannungsfelder, die durch ein Einpressen des in Figur 1 dargestellten Einpressrades 6I erzeugt werden, in Nutlängsrichtung der jeweils betreffenden Nut 4a oder 4b fortzubewegen, wird das Einpressrad 61 durch Rollen oder Walzen längs der jeweiligen Nut 4a oder 4b fortbewegt. Figur 2 verdeutlicht hierzu die Bewegungsabläufe des in Figur 1 dargestellten Einpressrades 6I in Relation zu dem jeweiligen Schaufelfuß 3. Während das Einpressrad 6 bei konstanter Wirkrichtung 8 der Einpresskraft um seine Drehachse rotiert (siehe Drehpfeil 9), wird die Schaufel 1 mitsamt Schaufelfuß 3 in Nutlängsrichtung NL gemäß dem Beweg gungspfeil 9b in Figur 2 translatorisch verschoben. Translation der Schaufel 1 und Rotation des Einpressrades 6 sind hierbei so aufeinander abgestimmt, dass kein Schlupf des Einpressrades 6 auftritt.

Wie in Figur 2 dargestellt, ist es hierbei zweckmäßig, den Abrollvorgang an einem Ende der jeweiligen Nut 4a oder 4b zu beginnen und an dem anderen Ende der Nut zu beenden. Prinzipiell ist aber auch jeder andere Anfangs- und Endpunkt innerhalb der Nut denkbar. Die Nut kann ebenso auch mehrmals von dem Einpresswerkzeug durchrollt werden.

Es zeigte sich, dass ein in dieser Weise gemäß dem erfindungsgemäßen Verfahren bearbeiteter Schaufelfuß durch das induzierte Druckeigenspannungsfeld eine höhere Ermüdungslebensdauer und darüber hinaus auch eine höhere Wechselfestigkeit aufweist als ein herkömmlich bearbeiteter Schaufelfuß. Die Schaufel kann demgemäss länger in Betrieb bleiben ohne ausgetauscht oder überholt werden zu müssen. Auch kann der erfindungsgemäß bearbeitete Schaufelfuß mit einer höheren Wechselbeanspruchung belastet werden.

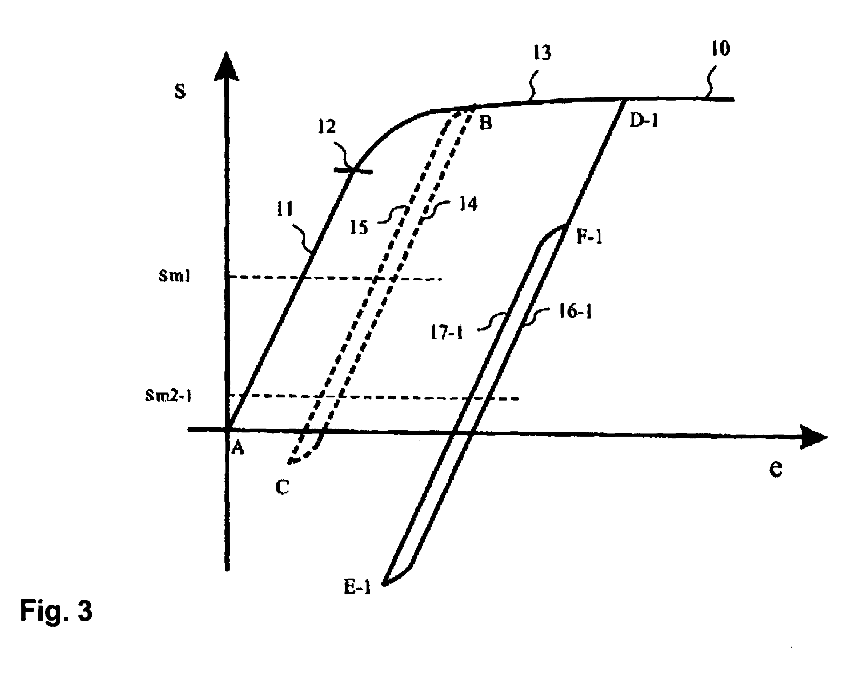

In Figuren 3 ist zur Erläuterung des erzielten Effekts ein Spannungs-Dehnungs-Diagramm dargestellt.

Figur 3 verdeutlicht, wie sich Wechselbelastungen bzw. Schwingbelastungen, die im Betrieb der Schaufel auftreten, im Spannungs-Dehnungs-Diagramm des Materials des Kerbgrunds 5a bzw. 5b der Nut 4a bzw. 4b des Schaufelfußes 2 aus Figur 1 darstellen. Die in Figur 3 dargestellte Spannungs-Dehnungskurve 10 gibt hierbei das Dehnungsverhalten des Materials des Kerbgrunds 5a bzw. 5b des Schaufelfußes 2 bei Zugbelastung wieder. Bei erstmaliger Belastung ohne vorheriger plastischer Deformation wird das Material zunächst rein elastisch entlang der Dehnungskennlinie 11 verformt. Diese elastische Verformung erfolgt linear zu der einwirkenden Zugspannung s. Ab einem bestimmten Belastungsgrenzwert 12 tritt neben der elastischen Verformung des Materials auch eine plastische Verformung des Materials auf. Die Spannungs-Dehnungskurve 10 verläuft ab hier nichtlinear und flacher (Spannungs-Dehnungskennlinie im Bereich 13).

Wird nun im Betrieb der Schaufel das Material des Kerbgrunds eines herkömmlichen Schaufelfußes, der nicht gemäß dem-erfindungsgemäßen Verfahren bearbeitet wurde, durch eine wechselnde bzw. schwingende Belastung mit einer bestimmten maximalen Spannung, die über dem Grenzwert 12 der rein elastischen Verformung liegt, beansprucht, so stellt sich die in Figur 3 strichliert dargestellte Belastungskurve B-C ein. Es kommt zunächst entlang der Spannungs-Dehnungskurve 10 zu einer Verformung des Materials bis hin zum Punkt B. Von hier fällt die wechselnde bzw. schwingende Belastung wieder längs der Linie 14 ab und geht bei Unterschreiten der Null-Spannungslinie von einer Zugbelastung in eine Druckbelastung über. Im Minimalpunkt C der wechselnden bzw. schwingenden Belastung erfolgt wieder eine Umkehr der Belastung. Die Belastung steigt im Weiteren längs der Linie 15 bis wieder zum Maximalpunkt B an. Insgesamt ergibt sich so eine wechselnde bzw. schwingende Beanspruchung um einen Spannungsmittelwert sₘ₁. Im Rahmen der weiteren Beschreibung bildet dieser Belastungszyklus den Referenz-Belastungsfall.

Wurden die Nuten des Schaufelfußes zuvor gemäß dem erfindungsgemäßen Verfahren bearbeitet, so ergibt sich bei gleicher Wechselbeanspruchung des Materials des Kerbgrunds ein geringerer Spannungsmittelwert sₘ₂₋₁ in Figur 3.

Wie oben ausgeführt, wird bei dem erfindungsgemäßen Verfahren den Kerbgründen 5a bzw. 5b der Nuten 4a und 4b des jeweiligen Schaufelfußes 2 durch ein Einpressen des Einpressrades 6I ein mechanisches Spannungsfeld aufgeprägt, wodurch in dem betreffenden Kerbgrund 5a bzw. 5b eine plastische Verformung bewirkt wird. Wird als Einpresswerkzeug das in Figur 1 dargestellte Einpressrad 6I verwendet, so stellt sich in dem Material des Kerbgrunds 5a bzw. 5b während des Einpressens des Einpressrades 61 ein Spannungs-Dehnungs-Zustand ein, der dem Punkt D-1 der Spannungs-Dehnungskurve 10 in Figur 3 entspricht. Die Ausbildung einer Zugspannung gemäß dem Punkt D-1 ist dadurch begründet, dass das Einpressrad 6I mit den Trapezschenkeln 7I-1 und 7I-2 an den Nutschultern 5a1 und 5a2 bzw. 5b1 und 5b2 der Nuten 4a und 4b zum Anliegen kommt und die Nuten durch die so eingeleitete Einpresskraft aufgespreizt werden. Die hierdurch in der betreffenden Nut hervorgerufene Zugspannung führt zu einer plastischen Zugverformung des Kerbgrunds 5a bzw. 5b gemäß dem Punkt D-1 in Figur 4. Nach einem Entfernen der Einpresskraft stellt sich im entlasteten Zustand aufgrund der bleibenden plastischen Verformung im Kerbgrund 5a bzw. 5b dann eine Druckeigenspannung entsprechend dem Punkt E-1 ein. Diese Druckeigenspannung liegt unterhalb der Null-Spannungslinie und bildet somit in Bezug auf Zugspannungen, die im Weiteren in den Kerbgrund eingeleitet werden, gleichsam einen negativen Offset.

Wird nun im Betrieb der Schaufel der in dieser Weise erfindungsgemäß bearbeitete Schaufelfuß 3 durch eine wechselnde bzw. schwingende Belastung mit der gleichen maximalen Zugspannung wie im oben beschriebenen Referenz-Belastungsfall beansprucht, so stellt sich die durchgezogen dargestellte Belastungskurve E-1 - F-1 ein. Der hieraus resultierende Spannungsmittelwert _{Sm2-1} liegt erheblich niedriger als der Spannungsmittelwert sₘ₁ im Referenz-Belastungsfall B - C. Das Material der Kerbgrund wird dementsprechend geringer beansprucht, wodurch die Ermüdungslebensdauer des Schaufelfußes erhöht wird. Ähnlich wie bei einer Oberflächenbehandlung durch Kugelstrahlen wird hierdurch aber zusätzlich auch die Wechselfestigkeit erhöht.

Um im Kerbgrund des Schaufelfußes ein optimales Druckeigenspannungsfeld zu erzielen, ist die Einpresskraft in Abhängigkeit der maximalen Wechselbeanspruchung des Schaufelfußes sowie des Materials des Schaufelfußes und der Kontur des Einpresswerkzeugs zu wählen.

Es hat sich herausgestellt, dass es bei einem Schaufelfuß, der aus einer Nickel-Basis-Legierung hergestellt ist, zweckmäßig ist, den Kerbgrund der Nut durch das aufgeprägte Spannungsfeld in einem Bereich zwischen 5% und 12% plastischer Dehnung zu verformen.

Ist der Schaufelfuß aus einer Titan-Legierung hergestellt, so ist es zweckmäßig, den Kerbgrund der Nut durch das aufgeprägte Spannungsfeld in einem Bereich zwischen 4% und 8% plastischer Dehnung zu verformen.

Das erfindungsgemäße Verfahren zeichnet sich insbesondere auch dadurch aus, dass es nicht bei der Herstellung von Schaufeln angewendet werden kann, sondern dass auch Schaufeln, die bereits im Betrieb waren, gemäß dem erfindungsgemäßen Verfahren bearbeitet werden können. Die durch Anwendung des Verfahrens hervorgerufenen Verformungen der Nutgeometrie sind so gering, dass keine weitere Bearbeitung des Schaufelfußes zum Ausgleich der Geometrieänderungen erforderlich ist. Dies stellt beispielsweise im Vergleich zu einer Beschichtung des Schaufelfußes einen erheblichen Vorteil dar insbesondere bei Schaufeln, die nicht neu hergestellt, sondern lediglich überholt werden. Durch ein Beschichten des Schaufelfußes würden die Außenabmessungen des Schaufelfußes so verändert, dass eine Bearbeitung des Schaufelfußes vor dem Beschichten oder der den Schaufelfuß aufnehmenden Aussparung zum Ausgleich der Geometrieänderung infolge der Beschichtung erfor derlich wäre. Hierdurch würden die Kosten für eine derartige lebensdauerverlängernde Maßnahmen erheblich erhöht werden. Das erfindungsgemäße Verfahren macht eine Vorbehandlung oder Nachbearbeitung des Schaufelfußes oder der Aussparung des Wellen- oder Gehäusebauteils zum Ausgleich von Geometrieänderungen nicht erforderlich.

Das erfindungsgemäße Verfahren sowie das in Figur dargestellte Einpresswerkzeuge stellt nur beispielhafte Ausführungsformen der Erfindung dar, die von einem Fachmann durchaus in vielfältiger Weise modifiziert werden können, ohne den Erfindungsgedanken zu verlassen. So ist beispielsweise eine Kombination des erfindungsgemäßen Verfahrens mit anderen, aus dem Stand der Technik bekannten Verfahren zur Induzierung vor Druckeigenspannungen und zur Erhöhung der Wechselfestigkeit oder anderer, die Lebensdauer der Schaufeln oder Schaufelfüße erhöhender Maßnahmen, wie beispielsweise ein Härten der Oberflächen, möglich und gegebenenfalls zweckmäßig.

### Bezugszeichenliste

- 1: Schaufel
- 2: Schaufelblatt
- 2SL: Längsrichtung des Schaufelblatts
- 3: Schaufelfuß
- 4a, 4b: Nuten
- 5a, 5b: Kerbgründe
- 5a1, 5a2 5b1, 5b2: Nutschultern
- 6, 6I: Einpressräder
- 7, 71, 7II: Einpressprofile des Einpressrades
- 7I-1, 7I-2: Trapezschenkel
- 7I-3: breite Trapezbasisseite
- 7I-4: schmale Trapezbasisseite
- 7I-1W, 7I-2W: Winkel
- 8: Wirkrichtung der Einpresskraft
- 9a: Drehrichtung des Einpressrads
- 9b: Verschieberichtung der Schaufel

- 10: Spannungs-Dehnungskurve
- 11: Elastischer Bereich der Spannungs-Dehnungskurve
- 12: Übergang zwischen elastischem und elastisch-plastischem Be-
- reich: der Spannungs-Dehnungskurve
- 13: elastisch-plastischer Bereich der Spannungs-Dehnungskurve
- 14: Entlastungsverlaufskurve des Referenz-Belastungsfalls
- 15: Belastungsverlaufskurve des Referenz-Belastungsfalls
- 16-1: Entlastungsverlaufskurven nach Durchführen des erfindungsge- mäßen Verfahrens
- 17-1: Belastungsverlaufskurven nach Durchführen des erfindungsge- mäßen Verfahrens

- A: Nullpunkt des Spannungs-Dehnungs-Diagramms
- B: Maximalbelastung des Referenz-Belastungsfalls
- C: Entlastungszustand des Referenz-Belastungsfalls
- D-1: Maximalbelastungen während des Einpressvorgangs
- E-1: Entlastungszustände nach Durchführen des erfindungsgemäßen Verfahrens
- F-1: Maximalbelastungen nach Durchführen des erfindungsgemäßen Verfahrens
- NL: Nutlängsrichtung

- e: Dehnung
- s: Spannung
- sₘ₁: mittlere Spannung des Referenz-Belastungsfalls
- sₘ₂₋₁: mittlere Spannungen nach Durchführen des erfindungsgemäßen Verfahrens

## Patentansprüche

1. Verfahren zur Erhöhung der Ermüdungslebensdauer eines Schaufelfusses (3) einer Turbomaschinenschaufel (1), wobei der Schaufelfuss (3) wenigstens eine Nut (4a, 4b) zur hintergreifenden Fixierung des Schaufelfusses (3) in einem Wellenbauteil oder einem Gehäusebauteil einer Turbomaschine aufweist, umfassend
einen Kerbgrund (5a, 5b) der Nut (4a, 4b) in einem Abschnitt der Nut (4a, 4b) ein mechanisches Spannungsfeld aufzuprägen, wobei das aufgeprägte mechanische Spannungsfeld eine plastische Verformung des Kerbgrunds (5a, 5b) bewirkt, das aufgeprägte mechanische Spannungsfeld in Nutlängsrichtung (NL) der Nut (4a, 4b) fortzubewegen und das aufgeprägte mechanische Spannungsfeld wieder zu entfernen, wobei in den Bereichen der Nut, in denen das mechanische Spannungsfeld aufgeprägt war, in dem Kerbgrund (5a, 5b) der Nut (4a, 4b) Druckeigenspannungen verbleiben, wobei das Aufprägen des mechanischen Spannungsfeldes mittels eines Einpresswerkzeugs erfolgt und das Einpresswerkzeug ein Einpressprofil aufweist und das Einpressprofil (7I) des Einpresswerkzeugs trapezförmig ausgebildet ist, wobei während des Einpressvorgangs die Trapezschenkel (7I-1, 7I-2) an den Nutschultern der Nut zum Aufliegen kommen.

2. Verfahren gemäss Anspruch 1, **dadurch gekennzeichnet, dass** das aufgeprägte mechanische Spannungsfeld über die gesamte Länge der Nut (4a, 4b) fortbewegt wird.

3. Verfahren gemäss einem der vorhergehenden Ansprüche, **dadurch gekennzeichnet, dass** zum Aufprägen des mechanischen Spannungsfeldes das Einpresswerkzeug mit einer definierten Einpresskraft in die Nut eingepresst wird.

4. Verfahren gemäss einem der vorhergehenden Ansprüche, **dadurch gekennzeichnet, dass** das in dem Kerbgrund der Nut aufgeprägte mechanische
Spannungsfeld durch ein Rollen oder Walzen des Einpresswerkzeugs längs der Nut fortbewegt wird.

5. Verfahren gemäss einem der vorhergehenden Ansprüche, **dadurch gekennzeichnet, dass** das Einpresswerkzeug ein Einpressrad (6I, 6II) ist.

6. Verfahren gemäss einem der vorhergehenden Ansprüche, **dadurch gekennzeichnet, dass** die definierte Einpresskraft in Abhängigkeit der maximalen Wechselbeanspruchung des Schaufelfusses, des Materials des Schaufelfusses und der Kontur des Einpresswerkzeugs ermittelt wird.

7. Verfahren gemäss einem der vorhergehenden Ansprüche, **dadurch gekennzeichnet, dass** der Schaufelfuss aus einer Nickel-Basis-Legierung hergestellt ist und der Kerbgrund der Nut durch das aufgeprägte Spannungsfeld in einem Bereich zwischen 5% und 12% plastischer Dehnung verformt wird.

8. Verfahren gemäss einem der Ansprüche 1 bis 6, **dadurch gekennzeichnet, dass** der Schaufelfuss aus einer Titan-Legierung hergestellt ist und der Kerbgrund der Nut durch das aufgeprägte Spannungsfeld in einem Bereich zwischen 4% und 8% plastischer Dehnung verformt wird.

9. Verfahren gemäss einem der vorhergehenden Ansprüche, **dadurch gekennzeichnet, dass** das Verfahren zur Erhöhung der Ermüdungslebensdauer des Schaufelfusses durch ein Induzieren von Druckeigenspannungen gemäss einem der vorhergehenden Ansprüche auf eine zu überholende Schaufel angewendet wird.

## Claims

1. Method for increasing the fatigue life of a blade root (3) of a turbomachine blade (1), wherein the blade root (3) has at least one slot (4a, 4b) for backgripping fixing of the blade root (3) in a shaft component or a casing component of a turbomachine, comprising
impressing a mechanical stress field in a notch root (5a, 5b) of the slot (4a, 4b) in a section of the slot (4a, 4b), wherein the impressed mechanical stress field brings about a plastic deformation of the notch root (5a, 5b),
progressively moving the impressed mechanical stress field in the slot longitudinal direction (NL) of the slot (4a, 4b),
and removing the impressed mechanical stress field again,
wherein residual compression stresses remain in the notch root (5a, 5b) of the slot (4a, 4b) in the regions of the slot in which the mechanical stress field was impressed,
wherein the impressing of the mechanical stress field is carried out by means of an impressing tool and
the impressing tool has an impressing profile, and the impressing profile (71) of the impressing tool is trapezoidally formed, wherein the trapezium sides (7I-1, 7I-2) come to bear upon the slot shoulders of the slot during the impressing process.

2. Method according to Claim 1, **characterized in that** the impressed mechanical stress field is progressively moved over the entire length of the slot (4a, 4b).

3. Method according to one of the preceding claims, **characterized in that** for impressing the mechanical stress field, the impressing tool is pressed into the slot with a defined impressing force.

4. Method according to one of the preceding claims, **characterized in that** the mechanical stress field, which is impressed in the notch root of the slot, is progressively moved along the slot by means of rolling or revolving of the impressing tool.

5. Method according to one of the preceding claims, **characterized in that** the impressing tool is an impressing wheel (61, 6II).

6. Method according to one of the preceding claims, **characterized in that** the defined impressing force is determined in dependence upon the maximum cyclic load of the blade root, upon the material of the blade root and upon the contour of the impressing tool.

7. Method according to one of the preceding claims, **characterized in that** the blade root is produced from a nickel-based alloy, and the notch root of the slot is deformed by means of the impressed stress field in a range of between 5% and 12% of plastic strain.

8. Method according to one of Claims 1 to 6, **characterized in that** the blade root is produced from a titanium alloy, and the notch root of the slot is deformed by means of the impressed stress field in a range of between 4% and 8% of plastic strain.

9. Method according to one of the preceding claims, **characterized in that** the method for increasing the fatigue life of the blade root by inducing residual compression stresses according to one of the preceding claims, is applied to a blade which is to be overhauled.

## Revendications

1. Procédé pour augmenter la durée de vie en fatigue d'une emplanture d'aube (3) d'une aube de turbomachine (1), l'emplanture d'aube (3) présentant au moins une rainure (4a, 4b) pour la fixation par engagement par l'arrière de l'emplanture d'aube (3) dans un composant d'arbre ou un composant de boîtier d'une turbomachine, comprenant :
une base d'encoche (5a, 5b) de la rainure (4a, 4b) pour appliquer dans une portion de la rainure (4a, 4b) un champ de contrainte mécanique, le champ de contrainte mécanique imprimé provoquant une déformation plastique de la base d'encoche (5a, 5b), afin de faire avancer le champ de contrainte mécanique imprimé dans la direction longitudinale de rainure (NL) de la rainure (4a, 4b), et de supprimer à nouveau le champ de contrainte mécanique imprimé, des contraintes de pression propres subsistant dans la base d'encoche (5a, 5b) de la rainure (4a, 4b) dans les régions de la rainure dans lesquelles le champ de contrainte mécanique était imprimé, l'impression du champ de contrainte mécanique étant produite au moyen d'un outil de pressage et l'outil de pressage présentant un profilé de pressage et le profilé de pressage (71) de l'outil de pressage étant réalisé sous forme trapézoïdale, et pendant l'opération de pressage, les branches trapézoïdales (7I-1, 7I-2) venant en appui contre les épaulements de rainure de la rainure.

2. Procédé selon la revendication 1, **caractérisé en ce que** le champ de contrainte mécanique imprimé est avancé sur toute la longueur de la rainure (4a, 4b).

3. Procédé selon l'une quelconque des revendications précédentes, **caractérisé en ce que** pour imprimer le champ de contrainte mécanique, l'outil de pressage est pressé avec une force de pressage définie dans la rainure.

4. Procédé selon l'une quelconque des revendications précédentes, **caractérisé en ce que** le champ de contrainte mécanique imprimé dans la base d'encoche de la rainure est avancé le long de la rainure par un roulement ou un roulage de l'outil de pressage.

5. Procédé selon l'une quelconque des revendications précédentes, **caractérisé en ce que** l'outil de pressage est une roue de pressage (61, 6II).

6. Procédé selon l'une quelconque des revendications précédentes, **caractérisé en ce que** la force de pressage définie est déterminée en fonction de la sollicitation alternée maximale de l'emplanture d'aube, du matériau de l'emplanture d'aube et du contour de l'outil de pressage.

7. Procédé selon l'une quelconque des revendications précédentes, **caractérisé en ce que** l'emplanture d'aube est fabriquée à partir d'un alliage à base de nickel, et la base d'encoche de la rainure est déformée par le champ de contrainte imprimé dans une plage comprise entre 5% et 12% d'étirement plastique.

8. Procédé selon l'une quelconque des revendications 1 à 6, **caractérisé en ce que** l'emplanture d'aube est fabriquée à partir d'un alliage de titane et la base d'encoche de la rainure est déformée par le champ de contrainte imprimé dans une plage comprise entre 4% et 8% d'étirement plastique.

9. Procédé selon l'une quelconque des revendications précédentes, **caractérisé en ce que** le procédé pour augmenter la durée de vie en fatigue de l'emplanture d'aube est appliqué par induction de contraintes de pression propres selon l'une quelconque des revendications précédentes sur une aube à reconditionner.
